# EUROPEAN PATENT SPECIFICATION

(11) **EP 2 594 767 B1**
(45) Date of publication and mention of the grant of the patent: **31.08.2016**
(21) Application number: 10854701.9
(22) Date of filing: 13.07.2010
(51) Int. Cl.: F02D 13/02, F02D 41/04

(54) **APPARATUS FOR CONTROLLING INTERNAL COMBUSTION ENGINE**
VORRICHTUNG ZUR STEUERUNG EINES VERBRENNUNGSMOTORS
DISPOSITIF DE COMMANDE POUR MOTEUR À COMBUSTION INTERNE

(43) Date of publication of application: 22.05.2013
(73) Proprietor: TOYOTA JIDOSHA KABUSHIKI KAISHA, Toyota-shi, Aichi-ken, 471-8571 (JP)
(72) Inventor: HAYASHI, Atsushi, Toyota-shi, Aichi-ken, 471-8571 (JP); YAMAMOTO, Takashi, Toyota-shi, Aichi-ken, 471-8571 (JP)
(74) Representative: Intès, Didier Gérard André
(86) International application number: PCT/JP2010/061835
(87) International publication number: WO 2012/008017

(56) References cited:
- EP-A2- 1 435 441
- EP-A2- 1 515 017
- JP-A- 2000 045 826
- JP-A- 2001 280 125
- JP-A- 2007 309 147
- JP-A- 2008 038 825
- JP-A- 2009 185 735

## Description

### Technical Field

The present invention relates to a control apparatus for an internal combustion engine.

### Background Art

A conventional exhaust purification apparatus for an internal combustion engine that is equipped with a fuel addition valve in an exhaust port is disclosed, for example, in Patent Document 1. In Patent Document 1, a technique is described in which fuel addition using a fuel addition valve is executed in synchrony with a valve opening period of an exhaust valve provided in a cylinder in which the fuel addition valve is installed.

The applicant is aware of the following documents, which include the above described document, as documents related to the present invention.

### Citation List

### Patent Documents

Patent Document 1: Japanese Laid-open Patent Application Publication No. 2001-280125
Patent Document 2: Japanese Laid-open Patent Application Publication No. 2008-38825
Patent Document 3: Japanese Laid-open Patent Application Publication No. 2008-69657

### Summary of Invention

### Technical Problem

In the above described conventional internal combustion engine in which a working angle of an exhaust valve is fixed, a valve opening period of the exhaust valve shortens as the number of engine revolutions increases. On the other hand, since an exhaust gas flow rate fundamentally increases as the number of engine revolutions increases, a fuel addition amount that is required to maintain an exhaust purification catalyst under an atmosphere in which there is a rich air/fuel ratio increases. That is, despite the fact that the required fuel addition amount increases as the number of engine revolutions increases, according to the configuration of the conventional internal combustion engine that is described above, when the number of engine revolutions is high, it is difficult to ensure an adequate amount of added fuel.

The present invention has been conceived to solve the above described problem, and an object of the present invention is to provide a control apparatus for an internal combustion engine that makes it possible to more adequately secure a required addition period of fuel that is added by a fuel addition valve, regardless of the operating state of the internal combustion engine.

### Solution to Problem

A first aspect of the present invention is a control apparatus for an internal combustion engine, comprising:
a fuel addition valve that is installed in at least one cylinder of an internal combustion engine in an upstream exhaust passage on a side that is further upstream than a merging portion with an upstream exhaust passage from another cylinder, and that is capable of adding fuel into the upstream exhaust passage;
an exhaust variable valve operating mechanism that makes a working angle of an exhaust valve variable;
fuel addition execution means that executes fuel addition using the fuel addition valve in synchrony with a valve opening period of the exhaust valve that is provided in a cylinder in which the fuel addition valve is installed;
required addition period acquisition means that acquires a required addition period of fuel using the fuel addition valve; and
exhaust working angle adjustment means that adjusts a working angle of the exhaust valve using the exhaust variable valve operating mechanism in accordance with the required addition period.

A second aspect of the present invention is the control apparatus for an internal combustion engine according to the first aspect of the present invention,
wherein when the required addition period is longer than a valve opening period of the exhaust valve, the exhaust working angle adjustment means increases a working angle of the exhaust valve.

A third aspect of the present invention is the control apparatus for an internal combustion engine according to the first or second aspect of the present invention, further comprising:
number of revolutions acquisition means that acquires a number of engine revolutions;
wherein the higher that a number of engine revolutions is, the greater a degree to which the exhaust working angle adjustment means increases a working angle of the exhaust valve.

A fourth aspect of the present invention is the control apparatus for an internal combustion engine according to any one of the first to third aspects of the present invention, further comprising:
air/fuel ratio acquisition means that is installed in an exhaust passage on a side that is further downstream than the fuel addition valve, and that acquires an air/fuel ratio of exhaust gas; and
addition valve performance determination means that, when an air/fuel ratio of exhaust gas that is acquired by the air/fuel ratio acquisition means when performing fuel addition using the fuel addition valve is leaner than a target air/fuel ratio, determines that a flow rate of fuel that is added by the fuel addition valve has dropped.

A fifth aspect of the present invention is the control apparatus for an internal combustion engine according to the fourth aspect of the present invention,
wherein when the addition valve performance determination means determines that a flow rate of fuel that is added by the fuel addition valve has dropped, the exhaust working angle adjustment means increases a working angle of the exhaust valve.

A sixth aspect of the present invention is the control apparatus for an internal combustion engine according to any one of the first to third aspects of the present invention, further comprising:
air/fuel ratio acquisition means that is installed in an exhaust passage on a side that is further downstream that the fuel addition valve, and that acquires an air/fuel ratio of exhaust gas;
flow rate drop amount calculation means that, when performing fuel addition using the fuel addition valve, calculates an amount of a drop in a flow rate of fuel that is added by the fuel addition valve based on a difference between an air/fuel ratio of exhaust gas that is acquired by the air/fuel ratio acquisition means and a target air/fuel ratio; and
required addition period correction means that corrects the required addition period based on the amount of the drop in the flow rate.

A seventh aspect of the present invention is the control apparatus for an internal combustion engine according to any one of the first to sixth aspects of the present invention, further comprising:
an intake variable valve operating mechanism that makes valve opening characteristics of an intake valve variable;
air amount adjustment means that adjusts an air amount that is drawn into a cylinder by changing valve opening characteristics of the intake valve using the intake variable valve operating mechanism;
selection means that, when the required addition period is longer than a valve opening period of the exhaust valve, among an adjustment technique that adjusts a working angle of the exhaust valve by means of the exhaust working angle adjustment means and an adjustment technique that adjusts the air amount by means of the air amount adjustment means, selects an adjustment technique that is more advantageous in terms of fuel consumption of the internal combustion engine for ensuring a required addition amount by means of the fuel addition valve; and
adjustment execution means that executes an adjustment using an adjustment technique that is selected by the selection means so that a state is obtained in which a valve opening period of the exhaust valve becomes equal to or greater than the required addition period.

### Advantageous Effects of Invention

According to the first aspect of the present invention, by including means that adjusts a working angle of an exhaust valve in accordance with a required addition period of fuel that is added using a fuel addition valve, when there is a high number of engine revolutions or the like, the valve opening period of the exhaust valve can be extended by increasing the working angle of the exhaust valve as the need arises. Thus, a required addition period can be more adequately secured regardless of the operating state of the internal combustion engine.

According to the second aspect of the present invention, since the valve opening period of the exhaust valve can be extended by increasing the working angle of the exhaust valve, a required addition period can be more adequately secured.

According to the third aspect of the present invention, for a region in which the number of engine revolutions is high and it is difficult to secure a required addition period because the valve opening period of the exhaust valve is short, it is possible to widen a region in which addition of a required amount of fuel is possible.

According to the fourth aspect of the present invention, it is possible to diagnose a drop in the flow rate of fuel that is added by the fuel addition valve based on the actual air/fuel ratio of exhaust gas and the target air/fuel ratio when adding fuel.

According to the fifth aspect of the present invention, to compensate for a drop in the fuel flow rate of the fuel addition valve, a region in which fuel addition is possible can be secured that is equivalent to before the drop in the fuel flow rate by increasing the working angle of the exhaust valve.

According to the sixth aspect of the present invention, a required addition period is corrected based on an amount of a drop in the flow rate of fuel that is added by the fuel addition valve. As a result, the working angle of the exhaust valve is adjusted in accordance with a required addition period after correction that reflects the influence of the aforementioned flow rate drop. Therefore, to compensate for a drop in the fuel flow rate of the fuel addition valve, a region in which fuel addition is possible can be secured that is equivalent to before the drop in the fuel flow rate by increasing the working angle of the exhaust valve.

According to the seventh aspect of the present invention it is possible to widen a region in which addition of a required amount of fuel is possible while suppressing fuel consumption.

### Brief Description of Drawings

Figure 1 is a diagram for describing the system configuration according to a first embodiment of the present invention;
Figure 2 is a view for describing the detailed configuration of a fuel addition valve shown in Figure 1;
Figure 3 is a view for describing a technique for controlling a fuel addition amount using the fuel addition valve;
Figure 4 is a view for describing characteristic control in the first embodiment of the present invention in comparison with a conventional configuration;
Figure 5 is a flowchart of a routine that is executed in the first embodiment of the present invention;
Figure 6 is a view for describing characteristic control that is executed according to a second embodiment of the present invention;
Figure 7 is a view that illustrates the influence of a drop in the fuel flow rate on a waveform of an air/fuel ratio at a time of fuel addition by the fuel addition valve;
Figure 8 is a view for describing characteristic control according to a third embodiment of the present invention;
Figure 9 is a flowchart of a routine that is executed in the third embodiment of the present invention to realize an addition valve deterioration learning;
Figure 10 is a flowchart that illustrates a control routine that is executed when performing a fuel addition operation according to the third embodiment of the present invention; and
Figure 11 is a flowchart of a routine that is executed in a fourth embodiment of the present invention.

### Description of Embodiments

### First Embodiment

### [Description of System Configuration]

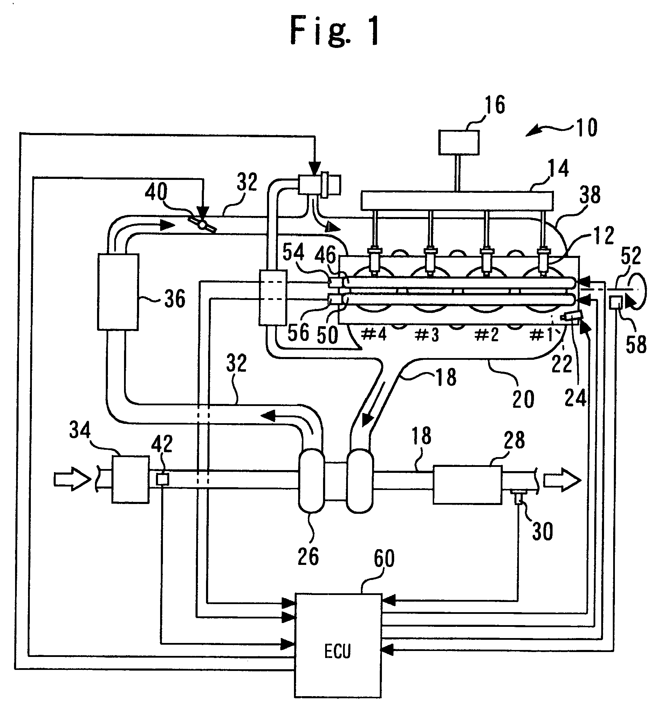

Figure 1 is a diagram for describing the system configuration according to a first embodiment of the present invention. The system shown in Figure 1 includes a compression ignition-type internal combustion engine 10. In this case, as an example of a compression ignition-type internal combustion engine, it is assumed that the internal combustion engine 10 is an in-line four-cylinder diesel engine.

Each cylinder of the internal combustion engine 10 is provided with an injector 12 that injects fuel directly into the cylinder. The injectors 12 of the respective cylinders are connected to a common rail 14. Fuel stored in an unshown fuel tank is high-pressure fuel that is pressurized to a predetermined fuel pressure by a supply pump 16. Fuel that is retained inside the common rail 14 is supplied to each injector 12.

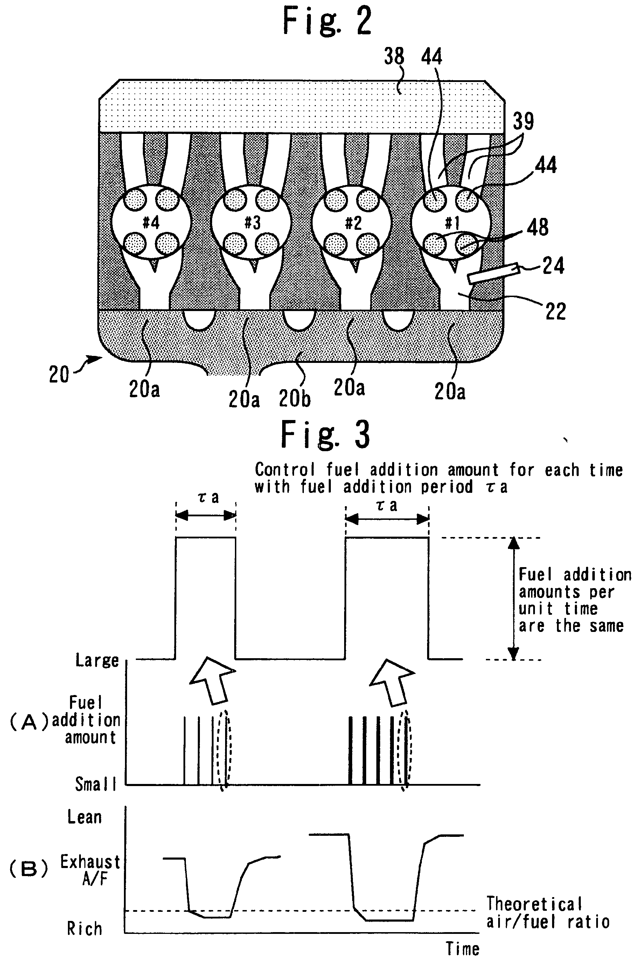

Figure 2 is a view for describing the detailed configuration of the fuel addition valve 24 shown in Figure 1. An exhaust passage 18 of the internal combustion engine 10 is divided into branches by an exhaust manifold 20, and each branch thereof connects to an exhaust port 22 of each cylinder. The exhaust manifold 20 has branch portions 20a that connect with the exhaust port 22 of each cylinder, and a merging portion 20b after the branch portions 20a of each cylinder have merged.

As shown in Figure 1 and Figure 2, the fuel addition valve 24 for injecting (adding) fuel into the exhaust port 22 is installed in the vicinity of the exhaust port 22 in a #1 cylinder of the internal combustion engine 10. Hereunder, the #1 cylinder in which the fuel addition valve 24 is installed is referred to as an "addition valve installation cylinder". Furthermore, herein, the exhaust port 22 in each cylinder and the respective branch portions 20a that connect with the respective exhaust ports 22 are defined as an "upstream exhaust passage" from the respective cylinders.

As shown in Figure 1, the internal combustion engine 10 of the present embodiment also includes a turbosupercharger 26. The exhaust passage 18 is connected to an exhaust turbine of the turbosupercharger 26. An exhaust purification apparatus 28 for purifying exhaust gas is provided on a downstream side of the turbosupercharger 26 in the exhaust passage 18. In this case, a filter with a catalyst that includes both a function as a storage-reduction type NOx catalyst and a function as a PM filter that traps PM (particulate matter) is provided as the exhaust purification apparatus 28. An air/fuel ratio sensor 30 is arranged on a downstream side of the exhaust purification apparatus 28 in the exhaust passage 18 to detect an air/fuel ratio of exhaust gas at that position.

An air cleaner 34 is provided in the vicinity of an inlet of the intake passage 32 of the internal combustion engine 10. Air that has been drawn in via the air cleaner 34 is compressed by an intake air compressor of the turbosupercharger 26, and thereafter is cooled by an intercooler 36. Intake air that has passed through the intercooler 36 is distributed to an intake port 39 (see Figure 2) of each cylinder by an intake manifold 38. An intake throttle valve 40 is arranged between the intercooler 36 and the intake manifold 38. An airflow meter 42 that detects an intake air amount is arranged in the vicinity of the air cleaner 34 on a downstream side thereof.

The system shown in Figure 1 also includes an intake variable valve operating mechanism 46 that can make valve opening characteristics of an intake valve 44 (see Figure 2) of each cylinder variable, and an exhaust variable valve operating mechanism 50 that can make valve opening characteristics of an exhaust valve 48 (see Figure 2) of each cylinder variable. More specifically, in this case the intake variable valve operating mechanism 46 has a function (phase varying function) that can vary the opening and closing timings of the intake valve 44 by changing a rotational phase of an intake cam (not shown) with respect to a rotational phase of a crankshaft 52 using hydraulic pressure or an electric motor, and a function (working angle varying function) that can continuously vary the working angle (and lift amount) of the intake valve 44.

The exhaust variable valve operating mechanism 50 has a phase varying function and a working angle varying function that are the same as those of the intake variable valve operating mechanism 46. Further, the intake variable valve operating mechanism 46 includes an intake cam angle sensor 54 for detecting a rotational position (advance amount) of an intake camshaft, and a working angle sensor (not shown) for detecting a working angle of the intake valve 44. Likewise, the exhaust variable valve operating mechanism 50 includes an exhaust cam angle sensor 56, and a working angle sensor (not shown) for detecting a working angle of the exhaust valve 48. In addition, a crank angle sensor 58 for detecting a crank angle or the number of engine revolutions is arranged in the vicinity of the crankshaft 52.

The system of the present embodiment includes an ECU (Electronic Control Unit) 60. The various sensors and actuators described above are respectively connected to the ECU 60. The ECU 60 controls the operating state of the internal combustion engine 10 by driving each actuator according to a predetermined program based on sensor signals and information from the sensors and actuators.

### [Addition of Fuel to Exhaust Passage]

The above described exhaust purification apparatus 28 includes a storage-reduction type NOx catalyst (hereunder, referred to simply as the "NOx catalyst"). In order to release/reduce NOx that is stored in the NOx catalyst, it is necessary to supply exhaust gas having a rich air/fuel ratio to the NOx catalyst at predetermined time intervals. For this purpose, according to the present embodiment a configuration is adopted that adds fuel to the exhaust passage 18 using the fuel addition valve 24. Added fuel that reaches the NOx catalyst reacts with oxygen contained in exhaust gas in the NOx catalyst and oxidizes. Fuel that remains after most of the oxygen is consumed makes the atmosphere of the NOx catalyst a rich atmosphere, and this surplus fuel also functions as a reducing agent. In this connection, in addition to the above described purpose of supplying a reducing agent to the NOx catalyst, other purposes for performing fuel addition using the fuel addition valve 24 include increasing the temperature of a catalyst such as a NOx catalyst, and combusting and removing PM that has been trapped in a PM filter.

According to the present embodiment, from the viewpoint of the arrangement of fuel piping and the like, the fuel addition valve 24 is installed in the exhaust port 22 of the #1 cylinder (addition valve installation cylinder). When the fuel addition valve 24 is installed in the exhaust port 22 in this manner, to prevent added fuel from adhering to the inner wall of the exhaust port and to ensure the dispersibility of added fuel, it is preferable to perform fuel addition in synchrony with a time period in which exhaust gas is flowing inside the exhaust port 22 of the addition valve installation cylinder, that is, in synchrony with a valve opening period of the exhaust valve 48 of the addition valve installation cylinder.

Figure 3 is a view for describing a technique for controlling a fuel addition amount using the fuel addition valve 24. More specifically, Figure 3(A) illustrates a situation in which fuel addition is performed using the fuel addition valve 24, and Figure 3(B) shows waveforms of an air/fuel ratio (A/F) of exhaust gas detected by the air/fuel ratio sensor 30 that is arranged downstream of the exhaust purification apparatus 28.

According to the present embodiment, when performing fuel addition in synchrony with a valve opening period of the exhaust valve 48 of the addition valve installation cylinder as described above, in order to secure a longer period in which the atmosphere of the NOx catalyst is made a rich atmosphere, as shown in Figure 3(A), execution of the fuel addition operation is divided over a plurality of cycles of the internal combustion engine 10. More specifically, a period in which the atmosphere of the NOx catalyst is made a rich atmosphere is controlled by means of the number of times that fuel addition is performed using the fuel addition valve 24. As a result, in a waveform on the right side in Figure 3(B), the air/fuel ratio of exhaust gas is controlled so as to be in a rich state for a longer period compared to a waveform on the left side in Figure 3(B).

The waveform illustrated on the right side in Figure 3(B) represents a case where the oxygen concentration in exhaust gas before starting fuel addition is higher than in the case represented by the waveform illustrated on the left side in Figure 3(B) (that is, the waveform illustrated on the right side represents a case where the exhaust gas prior to the start of fuel addition is lean). When the exhaust gas prior to the start of fuel addition is leaner, the fuel addition amount that is required to make the atmosphere of the NOx catalyst a rich atmosphere of the same degree is larger. However, the fuel addition amount per unit time of the fuel addition valve 24 is constant. Consequently, a fuel addition amount for a single time fuel addition is performed (in one cycle) is controlled by taking a fuel addition (injection) period τa of the fuel addition valve 24 as a parameter. Accordingly, in a case where the exhaust gas before starting fuel addition is leaner (the case represented by the waveform on the right side in Figure 3), as shown in Figure 3, the fuel addition period τa for a single time (in one cycle) is set so as to be a longer period.

### [Characteristic Control in First embodiment]

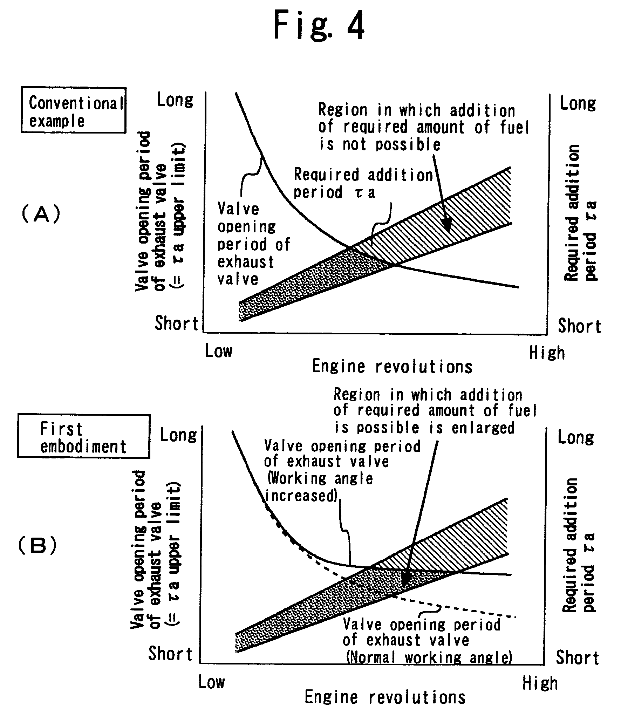

Figure 4 is a view for describing characteristic control in the first embodiment of the present invention in comparison with a conventional configuration. More specifically, Figure 4(A) is a view that illustrates a conventional configuration that is referred to for comparison, and Figure 4(B) is a view that illustrates control of the present embodiment.

A fuel addition amount that is required for reduction of a NOx catalyst is determined by the exhaust gas flow rate, an oxygen concentration in the exhaust gas (≈ actual A/F), and a reducing agent concentration (≈ target A/F) that it is desired to supply to the NOx catalyst. Further, adjustment of the fuel addition amount using the fuel addition valve 24 is performed by means of the fuel addition period τa as described above. Therefore, a fuel addition period that is required for reduction of the NOx catalyst (hereunder, referred to simply as the "required addition period τa") is also similarly determined by means of the exhaust gas flow rate, the actual A/F, and the target A/F.

When the relation between the required addition period τa that is determined as described above and the number of engine revolutions is represented diagrammatically, a region having a width as shown in Figure 4 is obtained. Fundamentally, the exhaust gas flow rate increases together with an increase in the number of engine revolutions. Therefore, as shown in Figure 4, the higher that the number of engine revolutions is, the longer that the required addition period τa becomes. Further, when performing fuel addition in synchrony with the valve opening period of the exhaust valve 48 of the addition valve installation cylinder as described above, the valve opening period of the exhaust valve 48 of the addition valve installation cylinder is the upper limit of the fuel addition period τa.

Figure 4(A) illustrates an example of the conventional configuration in which the working angle of the exhaust valve is fixed. When the working angle of the exhaust valve is fixed, as shown in Figure 4(A), the valve opening period of the exhaust valve (upper limit of the required addition period τa) becomes shorter as the number of engine revolutions increases. On the other hand, as described above, the required addition period τa lengthens as the number of engine revolutions increases. That is, despite the fact that the required addition period τa increases as the number of engine revolutions increases, according to the conventional configuration, as shown by the region indicated by hatching in Figure 4(A), when the number of engine revolutions is high, it is difficult to ensure an adequate amount of added fuel.

Therefore, according to the present embodiment, as shown in Figure 4(B), when the required addition period τa is longer than the valve opening period of the exhaust valve 48, the working angle of the exhaust valve 48 of the addition valve installation cylinder is increased using the exhaust variable valve operating mechanism 50. More specifically, a configuration is adopted that increases the working angle of the exhaust valve 48 of the addition valve installation cylinder in accordance with an increase in the number of engine revolutions. Thus, in a region with a high number of engine revolutions in which it is difficult to secure the required addition period τa because the valve opening period of the exhaust valve 48 is short, a period in which the fuel addition valve 24 can inject fuel (upper limit of the required addition period τa) can be extended. Therefore, as shown in Figure 4(B), it is possible to widen a region in which a required amount of fuel can be added.

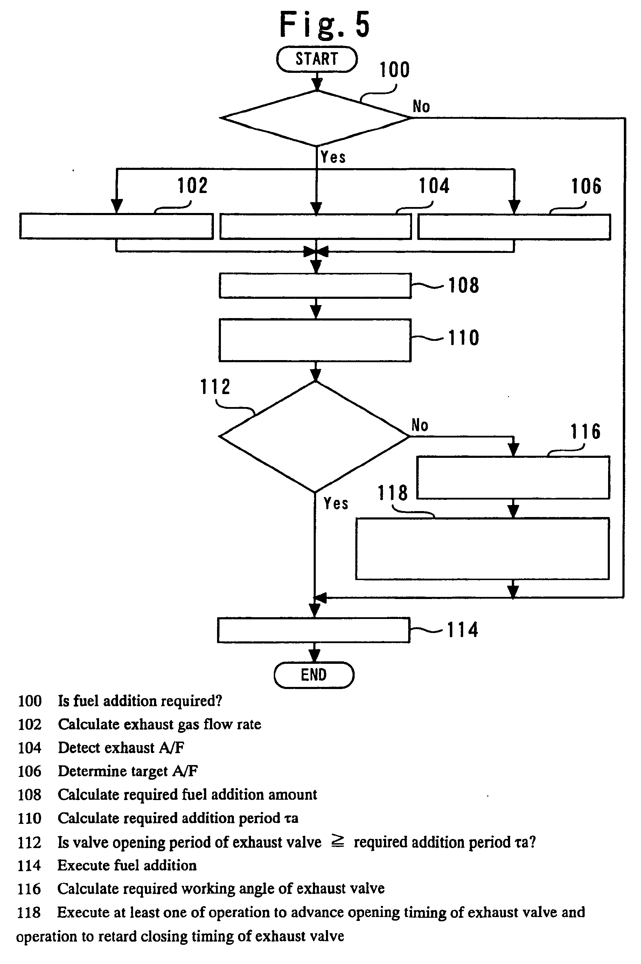

Figure 5 is a flowchart that illustrates a control routine that the ECU 60 executes in the first embodiment to realize the above described functions.

In the routine shown in Figure 5, first, it is determined whether or not fuel addition is required (step 100). If the result determined in step 100 is that fuel addition is required, the processing of the subsequent steps 102 to 106 is executed in parallel.

In the aforementioned step 102, the exhaust gas flow rate is calculated. Calculation of the exhaust gas flow rate can be performed based on, for example, an intake air amount detected by the airflow meter 42. In the aforementioned step 104, an air/fuel ratio of the exhaust gas is detected based on an output of the air/fuel ratio sensor 30. Further, in the aforementioned step 106, a target air/fuel ratio when executing the present fuel addition is determined according to a relation shown in a map or the like that is stored in advance in the ECU 60 (step 106).

Next, a fuel addition amount required when executing the present fuel addition is calculated based on the exhaust gas flow rate, the air/fuel ratio (actual air/fuel ratio) of the exhaust gas, and the target air/fuel ratio that are acquired in the aforementioned steps 102 to 106 (step 108). Subsequently, the required addition period τa of the fuel addition valve 24 that is required in order to satisfy the calculated required fuel addition amount is calculated (step 110). A fuel addition amount Q that the fuel addition valve 24 is capable of adding (injecting) in a unit time is previously stored in the ECU 60. In the aforementioned step 110, the required addition period τa is calculated by dividing the required fuel addition amount calculated in the aforementioned step 108 by the above described fuel addition amount Q.

Next, it is determined whether or not the current valve opening period of the exhaust valve 48 is greater than or equal to the required addition period τa (step 112). The valve opening period of the exhaust valve 48 can be calculated based on the working angle of the exhaust valve 48 and the number of engine revolutions. If it is determined in the aforementioned step 112 that the current valve opening period of the exhaust valve 48 is greater than or equal to the required addition period τa, it can be determined that fuel addition that can ensure the required fuel addition amount can be performed using the setting of the current working angle of the exhaust valve 48. Therefore, in this case, fuel addition is executed immediately using the fuel addition valve 24 (step 114).

In contrast, if the result determined in the aforementioned step 112 is negative, that is, if it is determined that the required addition period τa is longer than the current valve opening period of the exhaust valve 48, the required working angle of the exhaust valve 48 is calculated (step 116). More specifically, in step 116, the required working angle of the exhaust valve 48 is set so that the higher the number of engine revolutions is at the time of fuel addition, the larger the required working angle of the exhaust valve 48 becomes.

Subsequently, to obtain the required working angle of the exhaust valve 48 that is calculated in the aforementioned step 116, at least either one of an operation to advance the opening timing of the exhaust valve 48 and an operation to retard the closing timing of the exhaust valve 48 is executed (step 118). After adjusting the working angle of the exhaust valve 48 in step 118, fuel addition is executed using the fuel addition valve 24 (step 114).

According to the above described routine illustrated in Figure 5, when the required addition period τa is longer than the current valve opening period of the exhaust valve 48, the valve opening period of the exhaust valve 48 can be extended by increasing the working angle of the exhaust valve 48. It is thereby possible to extend the period in which the fuel addition valve 24 can inject fuel (upper limit of the required addition period τa). Thus, a region in which addition of a required amount of fuel is possible can be widened. Consequently, since the operating region in which the atmosphere of the NOx catalyst can be made a sufficiently rich atmosphere can be widened, it is possible to suppress a deterioration in the exhaust emissions.

Further, according to the above described routine, the higher that the number of engine revolutions is, the greater the degree to which the working angle of the exhaust valve 48 is increased. Consequently, in a region of a high number of engine revolutions in which it is difficult to secure the required addition period τa because the valve opening period of the exhaust valve 48 is short, the region in which addition of a required amount of fuel is possible can be widened.

It is noted that, in the above described first embodiment, "fuel addition execution means" according to the above described first aspect of the present invention is realized by the ECU 60 executing the processing of the above described step 114, "required addition period acquisition means" according to the first aspect of the present invention is realized by the ECU 60 executing the processing of the above described step 110, and "exhaust working angle adjustment means" according to the first aspect of the present invention is realized by the ECU 60 executing the processing of the above described steps 112, 116, and 118.

Further, "number of revolutions acquisition means" according to the above described third aspect of the present invention is realized by the ECU 60 acquiring the number of engine revolutions based on the output of the crank angle sensor 58.

### Second Embodiment

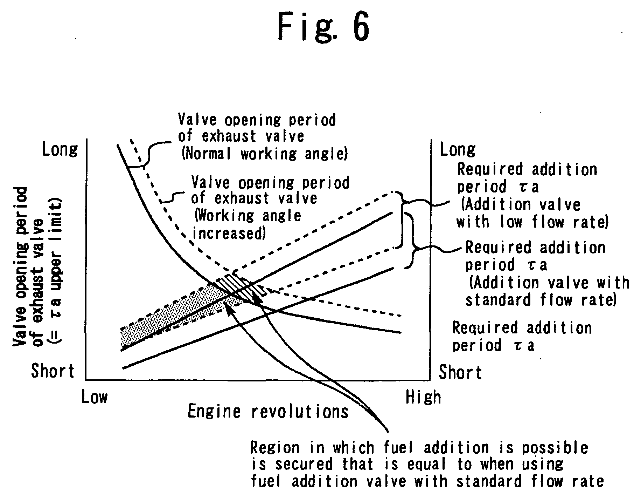

Next, a second embodiment of the present invention is described referring to Figure 6.

It is assumed that the hardware configuration illustrated in Figure 1 is used for the present embodiment also. According to the present embodiment, in addition to the control illustrated in the routine shown in Figure 5 of the first embodiment, the working angle of the exhaust valve 48 is adjusted as described hereunder.

Figure 6 is a view for describing characteristic control that is executed according to the second embodiment of the present invention.

When the fuel addition valve 24 is used in which a fuel flow rate that can be injected (fuel addition amount Q per unit time) is low, an injection period (required addition period) τa that is required to add fuel of a predetermined amount increases in comparison to when using the fuel addition valve 24 that can inject fuel at a standard fuel flow rate. Consequently, as shown in Figure 5, when using the fuel addition valve 24 in which the fuel flow rate that can be injected is low, the upper limit of the number of engine revolutions at which the required addition period τa can be secured decreases.

Therefore, according to the present embodiment, when using the fuel addition valve 24 in which a fuel flow rate that can be injected is low, in order to secure a fuel addition region (region that satisfies the required addition period τa) that is equivalent to a time of using the fuel addition valve 24 that can perform injection at a standard fuel flow rate, the working angle of the exhaust valve 48 is increased using at least either one of an operation to advance the opening timing of the exhaust valve 48 and an operation to retard the closing timing of the exhaust valve 48.

More specifically, τQ characteristics that are established between the fuel addition period (current conduction period) τ of the fuel addition valve 24 and the fuel addition amount Q per unit time that is injected from the fuel addition valve 24 when power is applied are previously measured and stored in the ECU 60. By referring to the τQ characteristics, in accordance with a difference between the fuel flow rate (fuel addition amount Q per unit time) of the fuel addition valve 24 that is actually mounted in the internal combustion engine 10 and the fuel flow rate of the standard fuel addition valve 24, the ECU 60 increases the working angle of the exhaust valve 48 so that a fuel addition region is secured that is equivalent to a time of using the fuel addition valve 24 that can perform injection at a standard fuel flow rate.

According to the above described operation that adjusts the working angle of the exhaust valve 48, a favorable fuel addition region can be secured even when the fuel flow rate of the fuel addition valve 24 that is actually mounted in the internal combustion engine 10 is less than the fuel flow rate of the standard fuel addition valve 24.

### Third Embodiment

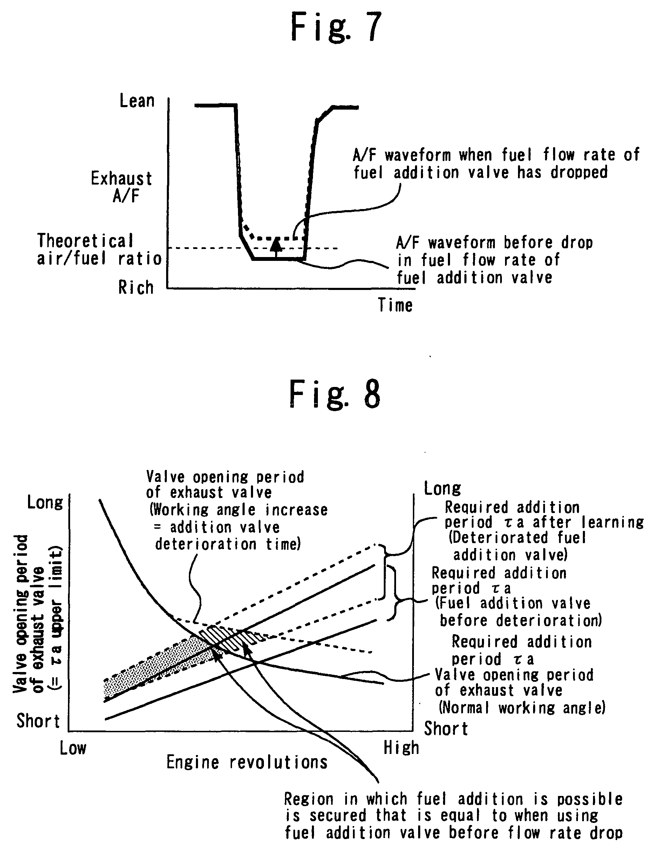

Next, a third embodiment 3 of the present invention is described referring to Figure 7 to Figure 10.

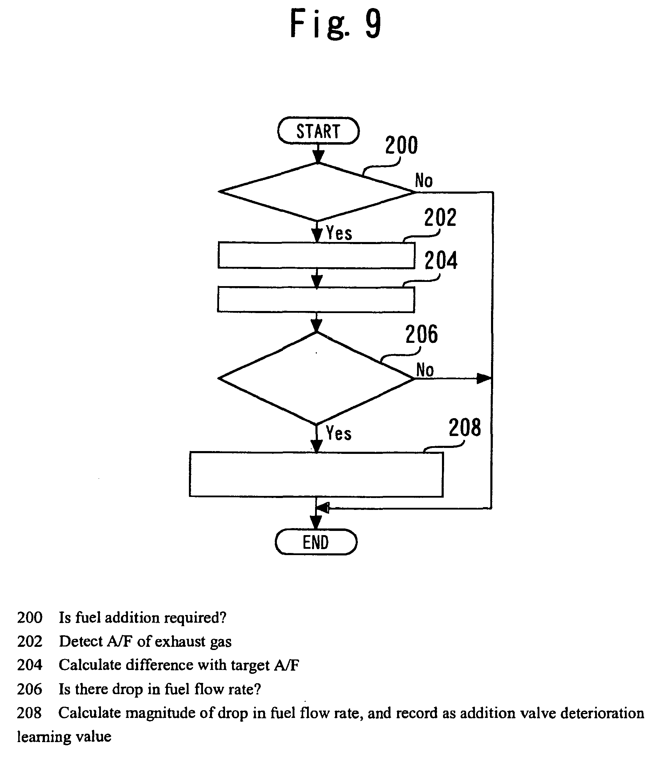

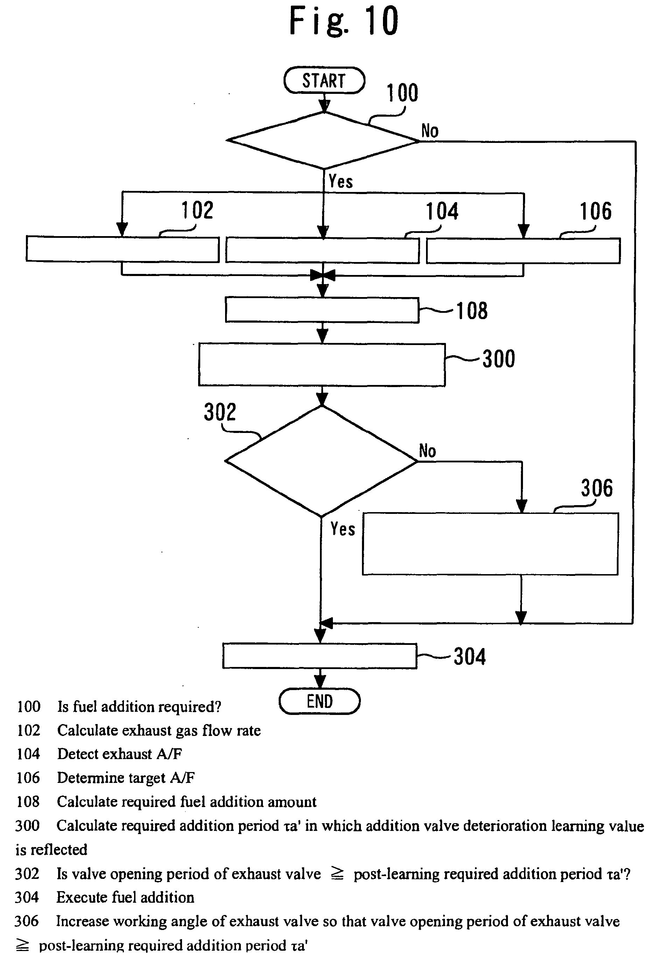

The system of the present embodiment can be realized using the hardware configuration shown in Figure 1 by causing the ECU 60 to execute the routines shown in Figure 9 and Figure 10, which are described later, instead of the routine shown in Figure 5.

Figure 7 is a view that illustrates the influence of a drop in the fuel flow rate on a waveform of an air/fuel ratio at a time of fuel addition by the fuel addition valve 24.

The flow rate of fuel (fuel addition amount Q per unit time) that is injected by the fuel addition valve 24 may drop due to deterioration over time or adherence of deposits. When a drop in the fuel flow rate of this kind occurs, as shown in Figure 7, the air/fuel ratio of the exhaust gas becomes lean compared to the air/fuel ratio before the drop in the fuel flow rate (corresponds to the target air/fuel ratio). Consequently, it is not possible to adequately control the atmosphere of the NOx catalyst to generate an intended rich atmosphere. Therefore, according to the present embodiment, a configuration is adopted so as to periodically learn a deterioration in the fuel addition valve 24 (the aforementioned drop in the fuel flow rate) based on the air/fuel ratio of exhaust gas when performing fuel addition. In this case, this learning is referred to as the "addition valve deterioration learning".

More specifically, when performing the addition valve deterioration learning, the existence or non-existence of a drop (deterioration) in the fuel flow rate of the fuel addition valve 24 is determined based on a difference between an air/fuel ratio of exhaust gas that is detected by the air/fuel ratio sensor 30 when performing fuel addition and an air/fuel ratio of exhaust gas when performing fuel addition in a state in which the fuel flow rate has not dropped (that is, a target air/fuel ratio). If it is determined that the fuel flow rate of the fuel addition valve 24 has dropped, the magnitude of the drop (drop amount) in the fuel flow rate is calculated based on the above described difference in the air/fuel ratios, and the calculated magnitude of the drop in the fuel flow rate is recorded as an addition valve deterioration learning value in the ECU 60. The addition valve deterioration learning value is updated sequentially as learning proceeds. Furthermore, the required addition period τa is corrected based on the recorded addition valve deterioration learning value.

Figure 8 is a view for describing characteristic control according to the third embodiment 3 of the present invention.

According to the present embodiment, the control described hereunder is executed after executing an addition valve deterioration learning operation as described above. More specifically, as shown in Figure 8, when the required addition period τa that has been corrected based on the addition valve deterioration learning value is longer than a valve opening period of the exhaust valve 48 when performing fuel addition, the valve opening period of the exhaust valve 48 is extended by increasing the working angle of the exhaust valve 48 so that a region in which fuel addition is possible that is equivalent to before the drop in the fuel flow rate is secured.

Figure 9 is a flowchart of a routine that the ECU 60 executes according to the third embodiment to realize the above described addition valve deterioration learning.

In the routine illustrated in Figure 9, first, it is determined whether or not a fuel addition operation is being executed (step 200). If the result determined in step 200 is that a fuel addition operation is being executed, the air/fuel ratio of exhaust gas downstream of the exhaust purification apparatus 28 is detected using the air/fuel ratio sensor 30 (step 202).

Next, a difference between the air/fuel ratio of the exhaust gas detected in the aforementioned step 202 and an air/fuel ratio of exhaust gas when performing a fuel addition operation in a state in which the fuel flow rate has not dropped (that is, a target air/fuel ratio) is calculated (step 204). Subsequently, it is determined whether or not the fuel flow rate of the fuel addition valve 24 has dropped based on whether or not the above described difference in the air/fuel ratios is equal to or greater than a predetermined value (in other words, whether or not the actual air/fuel ratio of the exhaust gas is leaner than the target air/fuel ratio) (step 206).

If the result determined in the aforementioned step 206 is that the fuel flow rate of the fuel addition valve 24 has dropped, after the magnitude of the drop (drop amount) in the fuel flow rate is calculated based on the above described difference between the exhaust gas air/fuel ratios, the magnitude of the drop is recorded as the addition valve deterioration learning value (step 208). In this connection, in the aforementioned step 208, the greater that the aforementioned difference in the exhaust gas air/fuel ratios is, the greater the value that is calculated as the magnitude of the drop in the fuel flow rate.

Figure 10 is a flowchart that illustrates a control routine that is executed when performing a fuel addition operation according to the third embodiment of the present invention. In Figure 10, steps that are the same as steps in the flowchart illustrated in Figure 5 according to the first embodiment are denoted by the same reference numbers, and a description of those steps is omitted or simplified below.

According to the routine illustrated in Figure 10, after a fuel addition amount that is required for the present fuel addition operation is calculated in step 108, a required addition period τa' in which the above described addition valve deterioration learning value has been reflected is calculated (step 300). More specifically, in step 300, the higher that the addition valve deterioration learning value (magnitude of drop in the fuel flow rate) is, the greater the value that is calculated for the required addition period τa' relative to the required addition period τa in a case where the addition valve deterioration learning value is not reflected (this value can be calculated by the technique in step 110 that is described above).

Next, it is determined whether or not the current valve opening period of the exhaust valve 48 is equal to or greater than the aforementioned required addition period τa' in which the addition valve deterioration learning value has been reflected (step 302). If the result determined in step 302 is affirmative, since it can be determined that fuel addition that can ensure the required fuel addition amount can be performed with the current setting of the working angle of the exhaust valve 48, a fuel addition operation is immediately executed using the fuel addition valve 24 (step 304).

In contrast, if the result determined in the aforementioned step 302 is negative, that is, if it is determined that the required addition period τa' after the above described learning operation is longer than the current valve opening period of the exhaust valve 48, the working angle of the exhaust valve 48 is increased so as to make the valve opening period of the exhaust valve 48 equal to or greater than the required addition period τa' after the above described learning operation (step 306).

According to the routine shown in Figure 9 as described above, a drop in the flow rate of fuel that is added by the fuel addition valve 24 can be diagnosed based on a difference between the actual air/fuel ratio of exhaust gas when adding fuel and the target air/fuel ratio. Further, when it is determined that the fuel flow rate of the fuel addition valve 24 has dropped, after calculating the magnitude of the drop in the fuel flow rate, the calculated magnitude of the drop is recorded as the addition valve deterioration learning value.

Furthermore, according to the routine shown in Figure 10 as described above, when it is determined that the fuel flow rate of the fuel addition valve 24 has dropped, that is, when the addition valve deterioration learning value is recorded, the required addition period τa' in which the addition valve deterioration learning value is reflected is calculated. Further, when it is determined that the required addition period τa' after the above described learning operation is longer than the current valve opening period of the exhaust valve 48, the working angle of the exhaust valve 48 is increased so that the valve opening period of the exhaust valve 48 becomes equal to or greater than the required addition period τa' after the above described learning operation. Thus, in order to compensate for a drop in the fuel flow rate of the fuel addition valve 24, it is possible to secure a region in which fuel addition is possible that is equivalent to before the drop in the fuel flow rate by increasing the working angle of the exhaust valve 48.

It is noted that, in the above described third embodiment, "air/fuel ratio acquisition means" according to the above described fourth or sixth aspect of the present invention is realized by the ECU 60 acquiring an air/fuel ratio of exhaust gas based on an output of the air/fuel ratio sensor 30, and "addition valve performance determination means" according to the fourth aspect of the present invention is realized by the ECU 60 executing the processing of the above described step 206.

Further, "flow rate drop amount calculation means" according to the sixth aspect of the present invention is realized by the ECU 60 executing the processing of the above described step 208, and "required addition period correction means" according to the sixth aspect of the present invention is realized by the ECU 60 executing the processing of the above described step 300.

### Fourth Embodiment

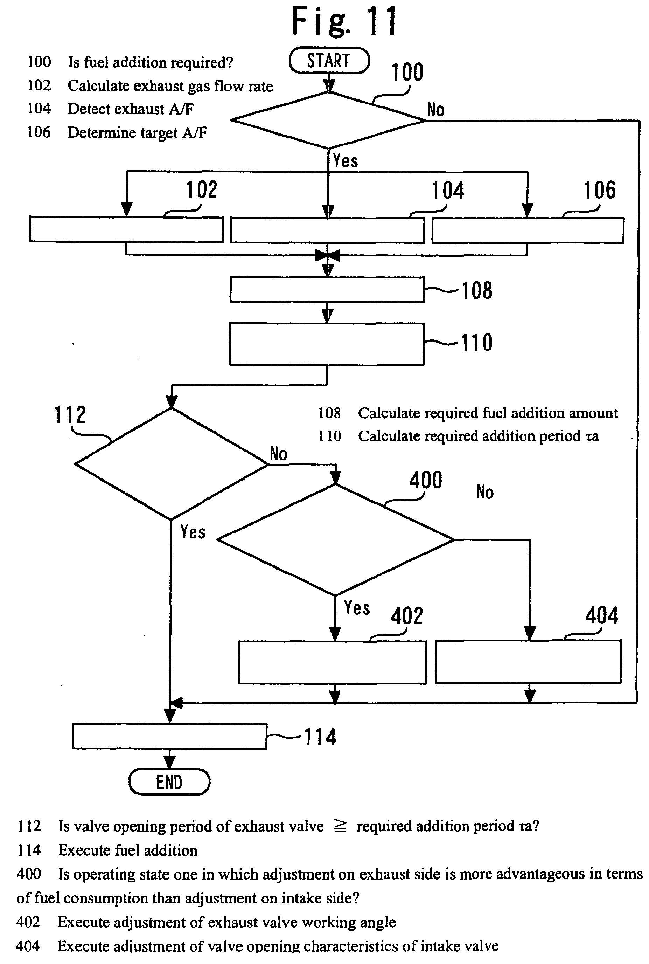

Next, a fourth embodiment of the present invention is described referring to Figure 11.

The system of the present embodiment can be realized using the hardware configuration shown in Figure 1 by causing the ECU 60 to execute a routine illustrated in Figure 11, which is described later, instead of the routine shown in Figure 5.

In the above described first embodiment and the like, a configuration is adopted such that, when it is determined that the required addition period τa is longer than the current valve opening period of the exhaust valve 48, the working angle of the exhaust valve 48 is increased so that the valve opening period of the exhaust valve 48 becomes equal to or greater than the required addition period τa. According to this technique, a region in which addition of a required amount of fuel is possible can be widened by increasing the fuel amount that can be added.

In contrast to the above described technique, a region in which addition of a required amount of fuel is possible can also be widened by changing the valve opening characteristics of the intake valve 44 so as to reduce the intake air amount. More specifically, when the intake air amount is reduced by changing the valve opening characteristics of the intake valve 44, the air/fuel ratio of the exhaust gas becomes a richer value, and the exhaust gas flow rate itself also decreases. Therefore, the amount of oxygen in the exhaust gas decreases, and the fuel addition amount that is required to make the atmosphere of the NOx catalyst a rich atmosphere decreases. As a result, since the required addition period τa need only be a short period, it is possible to widen the region in which addition of a required amount of fuel is possible.

According to the present embodiment, a configuration is adopted so that, when it is determined that the required addition period τa is longer than the current valve opening period of the exhaust valve 48, it is determined which of the above described two adjustment techniques (that is, adjustment of the working angle of the exhaust valve 48, and adjustment of the valve opening characteristics of the intake valve 44) is more advantageous in terms of fuel consumption in the current operating state of the internal combustion engine 10 for ensuring the required addition amount of the fuel addition valve 24. Thereafter, according to the present embodiment, control is performed so that the valve opening period of the exhaust valve 48 becomes equal to or greater than the required addition period τa using the adjustment technique that is determined as being more advantageous in terms of fuel consumption.

Figure 11 is a flowchart illustrating a control routine that the ECU 60 executes according to the fourth embodiment to realize that above described functions. In Figure 11, steps that are the same as steps in the flowchart illustrated in Figure 5 according to the first embodiment are denoted by the same reference numbers, and a description of those steps is omitted or simplified below.

According to the routine illustrated in Figure 11, if it is determined that the result determined in step 112 is negative (that is, if it is determined that the required addition period τa is longer than the current valve opening period of the exhaust valve 48), it is next determined whether or not, in the current operating state of the internal combustion engine 10, adjusting the working angle of the exhaust valve 48 is more advantageous in terms of fuel consumption than adjusting the valve opening characteristics of the intake valve 44 for ensuring the required addition amount of the fuel addition valve 24 (step 400). Which operation among an operation to adjust the working angle of the exhaust valve 48 and an operation to adjust the opening and closing timings of the intake valve 44 is advantageous in terms of fuel consumption differs according to the operating state of the internal combustion engine 10. The ECU 60 includes therein a map (not illustrated) that specifies, based on experiment or simulation or the like that has been carried out in advance, which of the above described two adjustment techniques is more advantageous in terms of fuel consumption according to the relation between individual operating states of the internal combustion engine 10 and a required addition amount of the fuel addition valve 24. The determination in the aforementioned step 400 is performed utilizing the relation specified in the above described map. In this connection, a configuration may also be adopted that, instead of the aforementioned technique, for example, selects the adjustment technique that is more advantageous in terms of fuel consumption after calculating which of the two adjustment techniques is more advantageous in terms of fuel consumption using the actual machine.

If the result determined in the aforementioned step 400 is affirmative, control is executed so that the valve opening period of the exhaust valve 48 becomes equal to or greater than the required addition period τa by adjusting the working angle of the exhaust valve 48 (step 402). In contrast, if the result determined in the aforementioned step 400 is negative, control is executed so that the valve opening period of the exhaust valve 48 becomes equal to or greater than the required addition period τa by adjusting the valve opening characteristics of the intake valve 44 so that the intake air amount decreases (step 404). In step 404, as a specific technique for adjusting the valve opening characteristics of the intake valve 44 to decrease the intake air amount, for example, a technique can be used that reduces the working angle of the intake valve 44 using at least one of an operation to retard the opening timing and an operation to advance the closing timing.

According to the routine illustrated in Figure 11 that is described above, when it is determined that the required addition period τa is longer than the current valve opening period of the exhaust valve 48 when performing a fuel addition operation, among an adjustment technique that adjusts the working angle of the exhaust valve 48 and an adjustment technique that adjusts the valve opening characteristics of the intake valve 44, an adjustment technique is selected that is more advantageous in terms of fuel consumption in the current operating state of the internal combustion engine 10 for ensuring the required addition amount of the fuel addition valve 24. Subsequently, control is executed using the selected adjustment technique so that the valve opening period of the exhaust valve 48 becomes equal to or greater than the required addition period τa. It is thus possible to widen a region in which addition of a required amount of fuel is possible while suppressing fuel consumption.

According to the above described fourth embodiment, a configuration is adopted so that, when it is determined that the required addition period τa is longer than the current valve opening period of the exhaust valve 48 when performing a fuel addition operation, among an adjustment technique that adjusts the working angle of the exhaust valve 48 and an adjustment technique that adjusts the valve opening characteristics of the intake valve 44, an adjustment technique is selected that is more advantageous in terms of fuel consumption in the current operating state of the internal combustion engine 10 for ensuring the required addition amount of the fuel addition valve 24. However, the present invention is not limited to this configuration. For example, the following configuration may also be adopted. That is, a configuration may be adopted such that, when a required fuel addition amount is equal to or greater than a predetermined amount when performing a fuel addition operation (more specifically, when it is determined that the required addition period τa is longer than the current valve opening period of the exhaust valve 48), as well as adjusting the working angle of the exhaust valve 48, the valve opening characteristics of the intake valve 44 are controlled so as to reduce the intake air amount.

It is noted that, in the above described fourth embodiment, "air amount adjustment means" in the aforementioned seventh aspect of the present invention is realized by the ECU 60 adjusting the working angle of the intake valve 44 using the intake variable valve operating mechanism 46, "selection means" in the seventh aspect of the present invention is realized by the ECU 60 executing the processing of the above described step 400, and "adjustment execution means" in the seventh aspect of the present invention is realized by the ECU 60 executing the processing of the above described step 402 or 404.

In the foregoing first to fourth embodiments, examples have been described of control using the exhaust variable valve operating mechanism 50 that is capable of simultaneously changing the working angle of the exhaust valve 48 of each cylinder. However, the present invention is not limited thereto, and a configuration may be adopted in which only the working angle of the exhaust valve 48 in the addition valve installation cylinder is controlled independently of other cylinders.

Further, in the foregoing first to fourth embodiments, a configuration in which the fuel addition valve 24 is installed in the exhaust port 22 of the #1 cylinder has been described as an example. However, the installation location of the fuel addition valve according to the present invention is not limited to an exhaust port as long as the installation location of the fuel addition valve is in an upstream exhaust passage as defined herein (in the configuration shown in Figure 2, the exhaust port 22 of each cylinder and the branch portion 20a of the exhaust manifold 20 of each cylinder). Further, the fuel addition valve according to the present invention may also be installed in a plurality of cylinders.

### Description of symbols

- 10: internal combustion engine
- 12: injector
- 18: exhaust passage
- 20: exhaust manifold
- 20a: branch portion
- 20b: merging portion
- 22: exhaust port
- 24: fuel addition valve
- 28: exhaust purification apparatus
- 30: air/fuel ratio sensor
- 32: intake passage
- 38: intake manifold
- 44: intake valve
- 46: intake variable valve operating mechanism
- 48: exhaust valve
- 50: exhaust variable valve operating mechanism
- 52: crankshaft
- 54: intake cam angle sensor
- 56: exhaust cam angle sensor
- 58: crank angle sensor
- 60: ECU (Electronic Control Unit)

## Claims

1. A control apparatus for an internal combustion engine, comprising:
a fuel addition valve (24) that is installed in at least one cylinder of an internal combustion engine (10) in an upstream exhaust passage (22, 20a) on a side that is further upstream than a merging portion (20b) with an upstream exhaust passage (22, 20a) from another cylinder, and that is capable of adding fuel into the upstream exhaust passage (22, 20a);
an exhaust variable valve operating mechanism (50) that makes a working angle of an exhaust valve (48) variable;
fuel addition execution means that executes fuel addition using the fuel addition valve (24) in synchrony with a valve opening period of the exhaust valve (48) that is provided in a cylinder in which the fuel addition valve (24) is installed;
required addition period acquisition means that acquires a required addition period of fuel using the fuel addition valve (24); and
exhaust working angle adjustment means that adjusts a working angle of the exhaust valve (48) using the exhaust variable valve operating mechanism (50) in accordance with the required addition period.

2. The control apparatus for an internal combustion engine according to claim 1,
wherein when the required addition period is longer than a valve opening period of the exhaust valve (48), the exhaust working angle adjustment means increases a working angle of the exhaust valve (48).

3. The control apparatus for an internal combustion engine according to claim 1 or 2, further comprising:
number of revolutions acquisition means that acquires a number of engine revolutions;
wherein the higher that a number of engine revolutions is, the greater a degree to which the exhaust working angle adjustment means increases a working angle of the exhaust valve (48).

4. The control apparatus for an internal combustion engine according to any one of claims 1 to 3, further comprising:
air/fuel ratio acquisition means that is installed in an exhaust passage (18) on a side that is further downstream than the fuel addition valve (24), and that acquires an air/fuel ratio of exhaust gas; and
addition valve performance determination means that, when an air/fuel ratio of exhaust gas that is acquired by the air/fuel ratio acquisition means when performing fuel addition using the fuel addition valve (24) is leaner than a target air/fuel ratio, determines that a flow rate of fuel that is added by the fuel addition valve (24) has dropped.

5. The control apparatus for an internal combustion engine according to claim 4,
wherein when the addition valve performance determination means determines that a flow rate of fuel that is added by the fuel addition valve (24) has dropped, the exhaust working angle adjustment means increases a working angle of the exhaust valve (48).

6. The control apparatus for an internal combustion engine according to any one of claims 1 to 3, further comprising:
air/fuel ratio acquisition means that is installed in an exhaust passage (18) on a side that is further downstream that the fuel addition valve (24), and that acquires an air/fuel ratio of exhaust gas;
flow rate drop amount calculation means that, when performing fuel addition using the fuel addition valve (24), calculates an amount of a drop in a flow rate of fuel that is added by the fuel addition valve (24) based on a difference between an air/fuel ratio of exhaust gas that is acquired by the air/fuel ratio acquisition means and a target air/fuel ratio; and
required addition period correction means that corrects the required addition period based on the amount of the drop in the flow rate.

7. The control apparatus for an internal combustion engine according to any one of claims 1 to 6, further comprising:
an intake variable valve operating mechanism (46) that makes valve opening characteristics of an intake valve (44) variable;
air amount adjustment means that adjusts an air amount that is drawn into a cylinder by changing valve opening characteristics of the intake valve (44) using the intake variable valve operating mechanism (46);
selection means that, when the required addition period is longer than a valve opening period of the exhaust valve (48), among an adjustment technique that adjusts a working angle of the exhaust valve (48) by means of the exhaust working angle adjustment means and an adjustment technique that adjusts the air amount by means of the air amount adjustment means, selects an adjustment technique that is more advantageous in terms of fuel consumption of the internal combustion engine (10) for ensuring a required addition amount by means of the fuel addition valve (24); and
adjustment execution means that executes an adjustment using an adjustment technique that is selected by the selection means so that a state is obtained in which a valve opening period of the exhaust valve (48) becomes equal to or greater than the required addition period.

## Patentansprüche

1. Steuerungsvorrichtung für einen Verbrennungsmotor, umfassend:
ein Kraftstoffzugabeventil (24), das in mindestens einem Zylinder eines Verbrennungsmotors (10) in einem stromaufwärtigen Auslasskanal (22, 20a) auf einer Seite angebracht ist, die weiter stromaufwärts ist als ein Zusammenführungsabschnitt (20b) mit einem stromaufwärtigen Auslasskanal (22, 20a) von einem anderen Zylinder, und das in der Lage ist, Kraftstoff in den stromaufwärtigen Auslasskanal (22, 20a) zuzugeben;
einen variablen Auslassventilbetätigungsmechanismus (50), der einen Arbeitswinkel eines Auslassventils (48) variabel macht;
ein Kraftstoffzugabedurchführmittel, das Kraftstoffzugabe durch Verwendung des Kraftstoffzugabeventils (24) synchron mit einem Ventilöffnungszeitraum des Auslassventils (48), das in einem Zylinder vorgesehen ist, in dem das Kraftstoffzugabeventil (24) angebracht ist, durchführt;
ein Mittel zum Erfassen des erforderlichen Zugabezeitraums, das einen erforderlichen Zeitraum zur Zugabe von Kraftstoff durch Verwendung des Kraftstoffzugabeventils (24) erfasst; und
ein Auslassarbeitswinkeleinstellmittel, das einen Arbeitswinkel des Auslassventils (48) durch Verwendung des variablen Auslassventilbetätigungsmechanismus (50) entsprechend dem erforderlichen Zugabezeitraum einstellt.

2. Steuerungsvorrichtung für einen Verbrennungsmotor nach Anspruch 1,
wobei, wenn der erforderliche Zugabezeitraum länger als ein Ventilöffnungszeitraum des Auslassventils (48) ist, das Auslassarbeitswinkeleinstellmittel einen Arbeitswinkel des Auslassventils (48) erhöht.

3. Steuerungsvorrichtung für einen Verbrennungsmotor nach Anspruch 1 oder 2, ferner umfassend:
ein Drehzahlerfassungsmittel, das eine Anzahl von Motorumdrehungen erfasst;
wobei ein Ausmaß, in dem das Auslassarbeitswinkeleinstellmittel einen Arbeitswinkel des Auslassventils (48) erhöht, umso größer ist, je höher eine Anzahl von Motorumdrehungen ist.

4. Steuerungsvorrichtung für einen Verbrennungsmotor nach einem beliebigen der Ansprüche 1 bis 3, ferner umfassend:
ein Luft-Kraftstoff-Verhältnis-Erfassungsmittel, das in einem Auslasskanal (18) auf einer Seite, die weiter stromabwärts als das Kraftstoffzugabeventil (24) ist, angebracht ist und das ein Luft-Kraftstoff-Verhältnis von Abgas erfasst; und
ein Zugabeventilleistungsbestimmungsmittel, das, wenn ein Luft-Kraftstoff-Verhältnis von Abgas, das durch das Luft-Kraftstoff-Verhältnis-Erfassungsmittel erfasst wird, wenn Kraftstoffzugabe durch Verwendung des Kraftstoffzugabeventils (24) durchgeführt wird, magerer ist als ein Soll-Luft-Kraftstoff-Verhältnis, bestimmt, dass ein Durchsatz von Kraftstoff, der durch das Kraftstoffzugabeventil (24) zugegeben wird, gesunken ist.

5. Steuerungsvorrichtung für einen Verbrennungsmotor nach Anspruch 4, wobei, wenn das Zugabeventilleistungsbestimmungsmittel bestimmt, dass ein Durchsatz von Kraftstoff, der durch das Kraftstoffzugabeventil (24) zugegeben wird, gesunken ist, das Auslassarbeitswinkeleinstellmittel einen Arbeitswinkel des Auslassventils (48) erhöht.

6. Steuerungsvorrichtung für einen Verbrennungsmotor nach einem beliebigen der Ansprüche 1 bis 3, umfassend:
ein Luft-Kraftstoff-Verhältnis-Erfassungsmittel, das in einem Auslasskanal (18) auf einer Seite, die weiter stromabwärts als das Kraftstoffzugabeventil (24) ist, angebracht ist und das ein Luft-Kraftstoff-Verhältnis von Abgas erfasst;
ein Durchsatzabnahmeausmaßberechnungsmittel, das, wenn Kraftstoffzugabe durch Verwendung des Kraftstoffzugabeventils (24) durchgeführt wird, ein Ausmaß einer Abnahme eines Durchsatzes von Kraftstoff, der durch das Kraftstoffzugabeventil (24) zugegeben wird, basierend auf einer Differenz zwischen einem Luft-Kraftstoff-Verhältnis von Abgas, das durch das Luft-Kraftstoff-Verhältnis-Erfassungsmittel erfasst wird, und einem Soll-Luft-Kraftstoff-Verhältnis berechnet; und
ein Mittel zur Korrektur des erforderlichen Zugabezeitraums, das den erforderlichen Zugabezeitraum basierend auf dem Ausmaß der Abnahme des Durchsatzes korrigiert.

7. Steuerungsvorrichtung für einen Verbrennungsmotor nach einem beliebigen der Ansprüche 1 bis 6, ferner umfassend:
einen variablen Einlassventilbetätigungsmechanismus (46), der die Ventilöffnungscharakteristik eines Einlassventils (44) variabel macht;
ein Luftmengeneinstellmittel, das eine Luftmenge, die in einen Zylinder gesaugt wird, durch Ändern der Ventilöffnungscharakteristik des Einlassventils (44) durch Verwendung des variablen Einlassventilbetätigungsmechanismus (46) einstellt;
ein Auswahlmittel, das, wenn der erforderliche Zugabezeitraum länger als ein Ventilöffnungszeitraum des Auslassventils (48) ist, aus einer Einstellmethode, die einen Arbeitswinkel des Auslassventils (48) mittels des Auslassarbeitswinkeleinstellmittels einstellt, und einer Einstellmethode, welche die Luftmenge mittels des Luftmengeneinstellmittels einstellt, eine Einstellmethode auswählt, die in Bezug auf den Kraftstoffverbrauch des Verbrennungsmotors (10) zum Sicherstellen einer erforderlichen Zugabemenge mittels des Kraftstoffzugabeventils (24) vorteilhafter ist; und
ein Einstellungsdurchführmittel, das eine Einstellung durch Verwendung einer Einstellmethode, die durch das Auswahlmittel ausgewählt wurde, durchführt, derart, dass ein Zustand erreicht wird, in dem ein Ventilöffnungszeitraum des Auslassventils (48) größer gleich dem erforderlichen Zugabezeitraum wird.

## Revendications

1. Appareil de commande pour un moteur à combustion interne, comportant :
une valve d'addition de carburant (24) qui est installée dans au moins un cylindre d'un moteur à combustion interne (10) dans un passage d'échappement en amont (22, 20a) sur un côté qui est davantage en amont qu'une partie de raccordement (20b) avec un passage d'échappement en amont (22, 20a) d'un autre cylindre, et qui est capable d'ajouter du carburant dans le passage d'échappement en amont (22, 20a) ;
un mécanisme d'actionnement de valve variable d'échappement (50) qui amène un angle de travail d'une valve d'échappement (48) à être variable ;
des moyens d'exécution d'addition de carburant qui exécutent une addition de carburant en utilisant la valve d'addition de carburant (24) de manière synchronisée avec une période d'ouverture de valve de la valve d'échappement (48) qui est prévue dans un cylindre dans lequel la valve d'addition de carburant (24) est installée ;
des moyens d'acquisition de période d'addition requise qui acquièrent une période d'addition de carburant requise en utilisant la valve d'addition de carburant (24) ; et
des moyens d'ajustement d'angle de travail d'échappement qui ajustent un angle de travail de la valve d'échappement (48) en utilisant le mécanisme d'actionnement de valve variable d'échappement (50) en fonction de la période d'addition requise.

2. Appareil de commande pour un moteur à combustion interne selon la revendication 1, dans lequel, quand la période d'addition requise est plus longue qu'une période d'ouverture de valve de la valve d'échappement (48), les moyens d'ajustement d'angle de travail d'échappement augmentent un angle de travail de la valve d'échappement (48).

3. Appareil de commande pour un moteur à combustion interne selon la revendication 1 ou 2, comportant en outre :
des moyens d'acquisition de nombre de tours qui acquièrent un nombre de tours de moteur ;
dans lequel, plus un nombre de tours de moteur est élevé, plus un degré selon lequel les moyens d'ajustement d'angle de travail d'échappement augmentent un angle de travail de la valve d'échappement (48) est grand.

4. Appareil de commande pour un moteur à combustion interne selon l'une quelconque des revendications 1 à 3, comportant en outre :
des moyens d'acquisition de rapport air/carburant qui sont installés dans un passage d'échappement (18) sur un côté qui est davantage en aval que la valve d'addition de carburant (24), et qui acquièrent un rapport air/carburant de gaz d'échappement ; et
des moyens de détermination de performance de valve d'addition qui, quand un rapport air/carburant du gaz d'échappement qui est acquis par les moyens d'acquisition de rapport air/carburant lors de la réalisation d'une addition de carburant en utilisant la valve d'addition de carburant (24) est plus pauvre qu'un rapport air/carburant cible, déterminent qu'un débit de carburant qui est ajouté par la valve d'addition de carburant (24) a chuté.

5. Appareil de commande pour un moteur à combustion interne selon la revendication 4, dans lequel, quand les moyens de détermination de performance de valve d'addition déterminent qu'un débit de carburant qui est ajouté par la valve d'addition de carburant (24) a chuté, les moyens d'ajustement d'angle de travail d'échappement augmentent un angle de travail de la valve d'échappement (48).

6. Appareil de commande pour un moteur à combustion interne selon l'une quelconque des revendications 1 à 3, comportant en outre :
des moyens d'acquisition de rapport air/carburant qui sont installés dans un passage d'échappement (18) sur un côté qui est davantage en aval que la valve d'addition de carburant (24), et qui acquièrent un rapport air/carburant de gaz d'échappement ;
des moyens de calcul de valeur de baisse de débit qui, lors de la réalisation d'une addition de carburant en utilisant la valve d'addition de carburant (24), calculent une quantité d'une baisse d'un débit du carburant qui est ajouté par la valve d'addition de carburant (24) sur la base d'une différence entre un rapport air/carburant du gaz d'échappement qui est acquis par les moyens d'acquisition de rapport air/carburant et un rapport air/carburant cible ; et
des moyens de correction de période d'addition requise qui corrigent la période d'addition requise sur la base de la quantité de la baisse de débit.

7. Appareil de commande pour un moteur à combustion interne selon l'une quelconque des revendications 1 à 6, comportant en outre :
un mécanisme d'actionnement de valve variable d'admission (46) qui amène des caractéristiques d'ouverture de valve d'une valve d'admission (44) à être variables ;
des moyens d'ajustement de quantité d'air qui ajustent une quantité d'air qui est admis dans un cylindre en changeant des caractéristiques d'ouverture de valve de la valve d'admission (44) en utilisant le mécanisme d'actionnement de valve variable d'admission (46) ;
des moyens de sélection qui, quand la période d'addition requise est plus longue qu'une période d'ouverture de valve de la valve d'échappement (48), parmi une technique d'ajustement qui ajuste un angle de travail de la valve d'échappement (48) à l'aide des moyens d'ajustement d'angle de travail d'échappement et une technique d'ajustement qui ajuste la quantité d'air à l'aide des moyens d'ajustement de quantité d'air, sélectionnent une technique d'ajustement qui est plus avantageuse en termes de consommation de carburant du moteur à combustion interne (10) pour assurer une quantité d'addition requise au moyen de la valve d'addition de carburant (24) ; et
des moyens d'exécution d'ajustement qui exécutent un ajustement en utilisant une technique d'ajustement qui est sélectionnée par les moyens de sélection de telle sorte que l'on obtient un état dans lequel une période d'ouverture de valve de la valve d'échappement (48) devient égale ou supérieure à la période d'addition requise.
